# EUROPEAN PATENT APPLICATION

(11) **EP 4 456 264 A1**
(43) Date of publication of application: **30.10.2024**
(21) Application number: 22911139.8
(22) Date of filing: 16.12.2022
(51) Int. Cl.: H01M 10/658, H01M 10/613, H01M 10/643, H01M 10/647, H01M 10/651, H01M 50/204

(54) **BATTERY PACK**

(30) Priority: 24.12.2021 JP 2021210755
(71) Applicant: Panasonic Holdings Corporation, Osaka, 571-8501 (JP); Panasonic Energy Co., Ltd., Osaka 570-8511 (JP)
(72) Inventor: ISHIZAKA, Katsushi, Osaka 571-0057 (JP); SAKAGAWA, Yasuaki, Osaka 571-0057 (JP); SHIMIZU, Keisuke, Osaka 571-0057 (JP); ARIKAWA, Hiroshi, Osaka 571-0057 (JP); FUKUDA, Shinsuke, Osaka 571-0057 (JP)
(74) Representative: Novagraaf International SA
(86) International application number: PCT/JP2022/046501
(87) International publication number: WO 2023/120436

(57) **Abstract**

A battery pack includes a battery block, and an outer covering case housing the battery block. The battery block includes a plurality of cells, a heat insulating member provided between adjacent cells of the plurality of cells, and side surface members with higher heat conductivity than heat conductivity of the heat insulating member, the side surface members being disposed in contact with side surfaces of the plurality of cells, excluding a site in which the heat insulating member is provided.

## Description

### Technical Field

The present disclosure relates to a battery pack.

### Background Art

A nonaqueous electrolyte secondary battery such as a lithium-ion battery is used in a form of a battery pack in which a plurality of cells (batteries) is electrically connected and housed in a case. When a cell in the battery pack is abnormal and one cell generates abnormal heat, the heat spreads to a surrounding cell through the side surface of the cell that generates abnormal heat, and chain of abnormal heat (a heat transfer and fire spread) may occur. In particular, in a battery pack such as an ultra-small battery pack in which space between adjacent cells is narrow, a problem of a heat transfer and fire spread becomes remarkable.

Patent literature 1 describes a battery pack including a core body made of deformable resin between cells, and a sheet body made of materials with a higher insulating property than the core body.

### Citation List

### Patent Literature

[PTL 1] Japanese Unexamined Patent Application, Publication No. 2012-033464

### SUMMARY OF THE INVENTION

A structure of a battery pack for preventing a heat transfer and fire spread to adjacent cells when heat generates in a cell in the battery pack is required.

An object of the present disclosure is to provide a battery pack in which a heat transfer and fire spread to adjacent cells are suppressed even when heat generation occurs in a cell.

A battery pack in accordance with the present disclosure includes a battery block, and an outer covering case housing the battery block. The battery block includes a plurality of cells, a heat insulating member provided between adjacent cells of the plurality of cells, and side surface members with higher heat conductivity than heat conductivity of the heat insulating member, the side surface members being disposed in contact with side surfaces of the plurality of cells, excluding a site in which the heat insulating member is provided.

The battery pack in accordance with the present disclosure can suppress heat transfer and fire spread to adjacent cells even when heat generation occurs in a cell.

### BRIEF DESCRIPTION OF THE DRAWINGS

FIG. 1 is an outside view of a battery pack in accordance with the present disclosure.
FIG. 2A is an outside view of the battery block and is a perspective view showing an entire battery block in accordance with the present disclosure.
FIG. 2B is an outside view and a partially exploded view of a battery block in accordance with the present disclosure.
FIG. 3A is a sectional view of the battery pack of FIG. 1 taken along line X-X in accordance with the present disclosure.
FIG. 3B is a sectional view of the battery pack of FIG. 1 taken along line X-X in accordance with the present disclosure, showing an example of a structure of a battery block different from that of FIG. 3A.
FIG. 4 is a view of another battery pack in accordance with the present disclosure, corresponding to FIGs. 3A and 3B.
FIG. 5A is a sectional view of the battery block of FIGs. 2A and 2B taken along line Y-Y in accordance with the present disclosure.
FIG. 5B is a sectional view of the battery block of FIGs. 2A and 2B taken along line Y-Y in accordance with the present disclosure, showing an example of a fixing structure of a battery block different from that of FIG. 5A.

### DESCRIPTION OF EMBODIMENT

Hereinafter, an exemplary embodiment of the present disclosure is described in detail with reference to the drawings. In the following description, specific shapes, materials, directions, numerical values, and the like, are examples for easy understanding of the present disclosure, and can be appropriately changed depending on applications of use, purposes, specifications, and the like. Furthermore, component elements of the exemplary embodiments, modifications, and the like, mentioned below are expected to be selectively combined from the beginning.

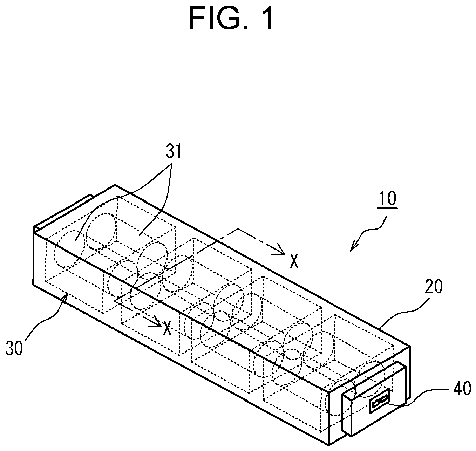

FIG. 1 is an outside view of battery pack 10 in accordance with the present disclosure. Battery pack 10 includes outer covering case 20 made of metal such as aluminum, and one or a plurality of battery blocks 30 housed inside outer covering case 20. Note here that outer covering case 20 is not limited to being made of metal, and may be made of resin.

Battery block 30 includes a plurality of cells 31 arranged in line, and the plurality of cells 31 is electrically connected to each other. For example, battery block 30 includes a plurality of cells 31 connected in parallel. Battery pack 10 includes a plurality of battery blocks 30 electrically connected in series or in parallel and is configured to output a voltage suitable for devices to be used. Each cell 31 is, for example, a cylindrical battery. Note here that the present disclosure shows a cylindrical battery as an example of cell 31, the battery is not limited to a cylindrical battery, and may be a prismatic battery or the like.

Cell 31 is a cylindrical battery including a bottomed cylindrical outer can and a sealing body that closes an opening of the outer can. Furthermore, an insulating gasket is provided between the outer can and the sealing body. In a cylindrical battery, in general, the sealing body serves as a positive electrode terminal, and the outer can serves as a negative electrode terminal. The sealing body includes an exhaust valve for exhausting gas when an abnormality occurs in cell 31 and the internal pressure rises. Note here that the exhaust valve may be provided at the bottom of the outer can.

In battery block 30, a plurality of cells 31 is housed in a holder. In the present disclosure, the holder of battery block 30 is configured by below-described heat insulating member 33 and side surface members 35 with higher heat conductivity. The holder fixes the arrangement of the plurality of cells 31 and maintains the form of battery block 30. Furthermore, battery pack 10 includes a terminal board (current collector board) for electrically connecting the plurality of battery blocks 30. The positive electrode terminal and the negative electrode terminal of battery block 30 are respectively connected to the terminal board. The terminal board and the holder may be integrated with each other.

External terminal 40 electrically connected to battery block 30 is provided at the end part of outer covering case 20. External terminal 40 is used as a terminal for applying a DC voltage when battery pack 10 is to be installed in a device to be used. Furthermore, external terminal 40 is used also in charging battery pack 10 (cells 31). External terminal 40 may be provided to only one end part of battery pack 10, or may be provided in a plurality of places. Furthermore, heat insulating member 33 or side surface members 35 constituting battery block 30 may serve as the outer covering case.

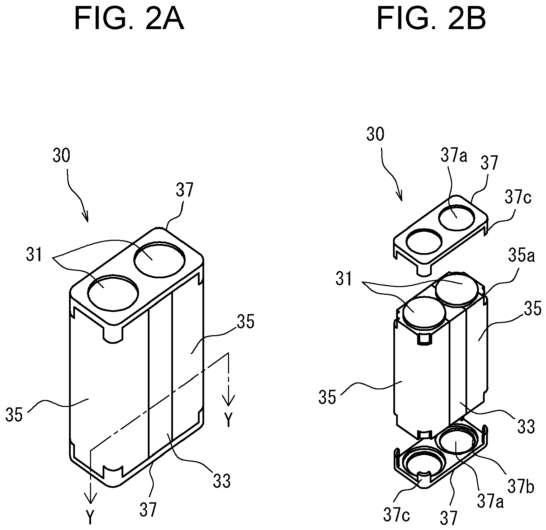

Next, a structure of battery block 30 is described with reference to FIGs. 2A and 2B. As shown in FIGs. 2A and 2B, battery block 30 includes a plurality of cells 31, heat insulating member 33, side surface members 35, and position fixing members 37. In battery block 30, the plurality of cells 31 is disposed in parallel. Battery block 30 includes heat insulating member 33 provided between two cells 31, and side surface member 35 disposed on the side surface in the arrangement direction of two cells, which are sandwiched and fixed by position fixing member 37 from the upper and lower sides. FIG. 2A shows a state in which battery block 30 is integrally fixed. FIG. 2B is a state before position fixing member 37 is attached.

As shown in FIG. 2B, heat insulating member 33 is disposed between two cells 31 in contact along the cylindrical-shaped side surfaces of cells 31. Side surface members 35 are disposed to cover the side surfaces of cells 31 from side surfaces of two cells 31 opposite to the surfaces on which heat insulating member 33 is disposed. Side surface members 35 are divided with respect to a plurality of cells 31 so as to be separated by heat insulating member 33.

The lengths of heat insulating member 33 and side surface member 35 along the axis of cells 31 are made to be smaller than the lengths of cells 31 along the axis. Therefore, as shown in FIG. 2B, both ends along the axis of cells 31 are protruding.

Position fixing members 37 are substantially flat-plate shaped and are mounted on the upper and lower surfaces of two cells 31. Position fixing members 37 include openings 37a at positions corresponding to the upper and lower surfaces of two cells 31. At a side of opening 37a of position fixing member 37 with which cells 31 are in contact, housing part 37b for housing end parts of cells 31 protruding from heat insulating member 33 and side surface member 35 is provided. As described above, the both ends of the cylindrical axes of cells 31 form electrodes. The electrodes of two cells 31 are electrically coupled by a current collecting plate via opening 37a of position fixing member 37 (not shown).

Fitting claw 37c is formed on each corner of each position fixing member 37. Fitting recess 35a is formed at a corresponding position of side surface member 35 when position fixing member 37 is placed on the upper surface of cells 31. Each fitting claw 37c of position fixing member 37 is fitted into corresponding fitting recess 35a of side surface members 35 sandwiching two cells 31 and heat insulating member 33 from both sides, and the end parts of cells 31 are housed in housing part 37b. Thereby, battery block 30 is fixed.

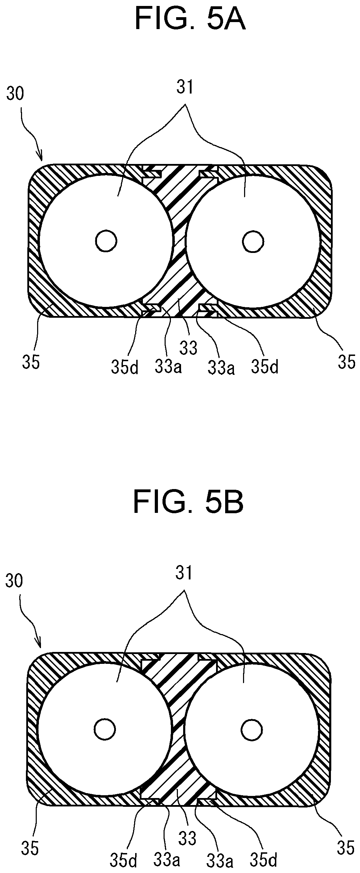

Note here that the number of cells 31 of battery block 30 is not necessarily two, and may be three or more. Arrangement of the plurality of cells 31 may be suitable so that the cross-sectional area of battery block 30 shrunks, but the plurality of cells 31 may be arranged in a straight line. Furthermore, FIGs. 2A and 2B show a configuration in which battery block 30 is fixed by position fixing member 37, but as mentioned later, battery block 30 may be fixed by heat insulating member 33 and side surface member 35 without providing position fixing member 37 (see, FIGs. 5A and 5B).

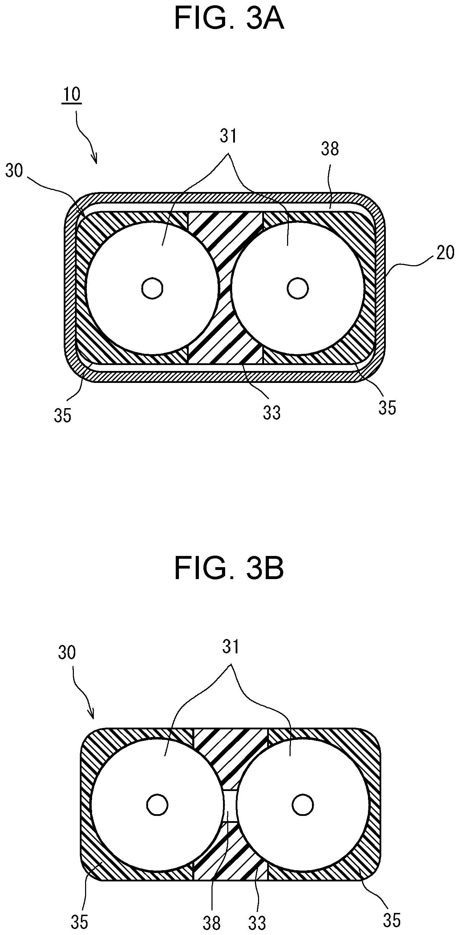

With reference to FIGs. 3A and 3B, a heat transmission structure of cells 31 in battery pack 10 of the present disclosure is described. FIGs. 3A and 3B are sectional views of battery pack 10 of FIG. 1 taken along line X-X. Battery block 30 includes, for example, a configuration shown in FIG. 2A, but battery block 30 is not limited thereto.

In battery pack 10 of the present disclosure, heat insulating member 33 with low heat-conductive property is disposed between two cells 31. Heat insulating member 33 is made of heat-insulating resin, foamed resin, foamed concrete, gypsum board, glass wool, or silica aerogel material. Heat insulating member 33 makes it difficult for heat generated in one cell 31 to be transmitted to other neighboring cells 31 being adjacent to the one cell 31 that generates heat. Side surface member 35 with higher heat conductivity than that of heat insulating member 33 is disposed in the side surface of cell 31 that is not in contact with heat insulating member 33. Side surface member 35 is made of, for example, a high heat-conductive material including a thermosetting resin and a heat-conductive filler and/or an endothermic filler. With such a configuration, the heat generated in cells 31 is less likely to be transmitted to adjacent cells 31 by heat insulating member 33, and is transmitted to side members 35 with high heat conductivity. Furthermore, thermosetting resin is preferable as the resin forming side surface member 35. When side surface members 35 are made of a thermosetting resin, side surface members 35 can be prevented from spreading fire when one cell 31 generates abnormal heat, and the holding function of cells 31 by side surface member 35 can be secured. Note here that examples of the resin forming side surface member 35 include thermosetting unsaturated polyester, epoxy resin, melamine resin, phenol resin, thermoplastic polycarbonate, polyethylene, polypropylene, polyvinyl chloride, polystyrene, or the like. As the heat-conductive filler, metal oxides (for example, aluminum oxide and zinc oxide), metal nitrides (for example, aluminum nitride and boron nitride), and metal oxynitrides (for example, aluminum oxynitride) are used. Furthermore, the endothermic filler exhibits an endothermic effect during thermal decomposition, and, examples thereof include aluminum hydroxide, magnesium hydroxide, and sodium hydrogen carbonate. The endothermic filler has the effect of reducing heat generation when cells 31 generate abnormal heat.

Battery block 30 is housed in outer covering case 20 so that side surface member 35 is in contact with the inner surface of outer covering case 20 on at least one surface. As described above, the heat generated from cell 31 is transmitted to and absorbed by side surface member 35. Furthermore, the heat absorbed by side surface member 35 is transmitted to outer covering case 20 and radiated from outer covering case 20 to the outside.

As shown in FIG. 3A, battery block 30 is configured to be settled into the cross section of outer covering case 20. However, air layer 38 is formed without being close contact with outer covering case 20 on, for example, the side surface in the direction perpendicular to a line connecting the centers of two cells 31 seen in a cross section (arrangement direction of the plurality of cells 31). Since the heat conductivity of air layer 38 is low, heat generated from cells 31 and transmitted to side surface member 35 is difficult to be transmitted to air layer 38, and propagates in the right-and-left direction of FIGs. 3A and 3B in surface member 35, and is transmitted to outer covering case 20. The heat transferred to outer covering case 20 propagates inside outer covering case 20 toward the periphery, and radiates to the outside from the entire periphery of outer covering case 20. Air layer 38 is advantageous in securing the length of the heat conduction path by outer covering case 20 between side surface member 35 being in contact with one cell 31 and side surface member 35 being in contact with other cell 31, and is advantageous in suppressing heat conduction via the heat conduction path by outer covering case 20 between cells 31 when heat is abnormally generated.

Note here that outer covering case 20 can be formed by coupling a plurality of members. This structure is not particularly limited.

In battery block 30, as shown in FIG. 3B, heat insulating member 33 is divided into two so as to provide air layer 38 between two cells 31. In FIG. 3B, outer covering case 20 is not shown.

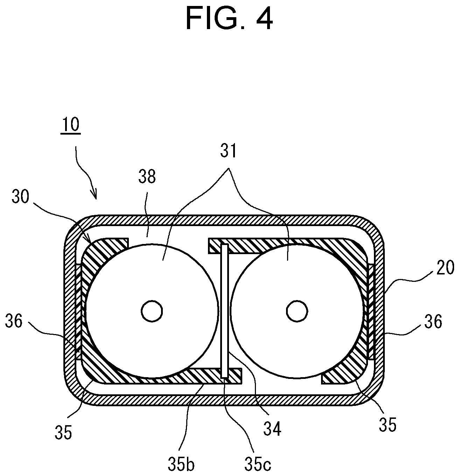

FIG. 4 is a view showing another heat transmission structure of battery pack 10. In the exemplary embodiment of FIG. 4, low heat-conductive plate material 34 as a heat insulating member is provided between adjacent cells 31. Plate material 34 is made of, for example, heat-insulating resin, foamed resin, foamed concrete, gypsum board, glass wool, or silica aerogel, and disposed between adjacent cells 31 along the entire length along the axis of cells 31.

The side surfaces of cells 31 on which plate material 34 is not disposed, high heat-conductive side surface member 35 is disposed.

Side surface member 35 of battery block 30 of this exemplary embodiment includes extending part 35b extending from the side surface at the opposite side of cell 31 where plate material 34 is disposed toward adjacent cell 31. Extending parts 35b of two side surface members 35 are configured so as to face each other. Each of extending parts 35b includes groove 35c at the tip end. Extending parts 35b are disposed facing each other. By fitting plate material 34 into grooves 35c provided on two side surface members 35, plate material 34 is fixed by side surface member 35.

In this exemplary embodiment, battery block 30 is fixed in a state in which two cells 31 are sandwiched and held between two side surface members 35 and plate material 34 is sandwiched between grooves 35c of two extending parts 35b.

In battery pack 10 of this exemplary embodiment, side surface members 35 are thermally coupled to the inner surface of outer covering case 20 via high heat-conductive adhesive 36. As high heat-conductive adhesive 36, for example, a silicone adhesive including a high heat-conductive filler is used. High heat-conductive adhesive 36 fixes battery block 30 inside outer covering case 20, and forms a heat transmission path between side surface member 35 and outer covering case 20.

The heat generated in cells 31 is difficult to transfer due to heat insulating plate material 34 between adjacent cells 31. Side surface member 35 is disposed on a side surface opposite to the side surface of cell 31 where plate material 34 is disposed. The heat generated in cells 31 is transferred to side surface member 35, and transferred to outer covering case 20 via high heat-conductive adhesive 36.

In battery pack 10 of this exemplary embodiment, air layer 38 is formed between plate material 34 of battery block 30 and outer covering case 20 other than side surface member 35. By providing plate material 34 between cells 31, heat transfer between adjacent cells 31 due to air convection can be effectively suppressed.

FIGs. 5A and 5B are views showing the fixing structure of battery block 30 in accordance with the present disclosure. In the battery block 30 shown in FIGs. 2A and 2B, fixing is carried out by position fixing member 37. Battery block 30 of this exemplary embodiment has a structure in which fixing is carried out by heat insulating member 33 and side surface members 35.

The structure of battery block 30 of FIG. 5A is the same as a structure of the battery block of FIGs. 2A and 2B in which heat insulating member 33 is sandwiched between adjacent cells 31, and cells 31 are sandwiched by side surface member 35 from both sides. FIG. 5A further includes a linking structure (recessed part 33a and protruding part 35d) fixing heat insulating member 33 and side surface members 35 together.

In battery block 30 of FIG. 5A, each side surface member 35 includes protruding part 35d protruding toward a surface that faces heat insulating member 33. Protruding part 35d may be provided, for example, along the entire length along the axis of cells 31, or may divided along the axis.

Recessed part 33a is formed in heat insulating member 33 in a position corresponding to protruding part 35d. By sandwiching the plurality of cells 31 being in contact with heat insulating member 33 with side surface members 35 from both side surfaces and fitting protruding parts 35d into recessed parts 33a, the plurality of cells 31 can be sandwiched and held to be fixed.

FIG. 5B shows another fixing structure of battery block 30. In battery block 30 of FIG. 5B, protruding parts 35d of side surface members 35 are arranged along the edge. Heat insulating member 33 includes recessed parts 33a in positions corresponding to protruding parts 35d. Similar to battery block 30 of FIG. 5A, protruding parts 35d and recessed parts 33a may be provided along the entire length along the axis of cells 31, or may be divided along the axis.

Similar to FIG. 5A, the plurality of cells 31 being in contact with heat insulating member 33 is sandwiched between side surface members 35 from both side surfaces, and protruding parts 35d are fitted into recessed parts 33a, whereby the plurality of cells 31 is sandwiched and held to be fixed.

Similar to battery pack 10 shown in FIGs. 3A and 3B, battery block 30 shown in FIGs. 5A and 5B can be housed in outer covering case 20 to form battery pack 10, or may serve as outer covering case 20.

Note here that the present invention is not limited to the above-described exemplary embodiments and modifications thereof, and it goes without saying that various modifications and improvements are possible within the scope of the matters described in claims of the present application.

### REFERENCE MARKS IN THE DRAWINGS

10 battery pack, 20 outer covering case, 30 battery block, 31 cell (battery), 33 heat insulating member, 33a recessed part, 34 plate material, 35 side surface member (high heat-conductive member), 35a fitting recess, 35b extending part, 35c groove, 35d protruding part, 36 high heat-conductive adhesive, 37 position fixing member, 37a opening, 37b housing part, 37c fitting claw, 38 air layer, 40 external terminal

## Claims

1. A battery pack comprising:
a battery block; and
an outer covering case housing the battery block,
the battery block including:
a plurality of cells arranged in line,
a heat insulating member provided between adjacent cells in the plurality of cells, and
a side surface member with higher heat conductivity than heat conductivity of the heat insulating member, the side surface member being disposed in contact with side surfaces of the plurality of cells, excluding a site in which the heat insulating member is provided.

2. A battery pack comprising:
a battery block; and
an outer covering case,
the battery block including:
a plurality of cells arranged in line,
a heat insulating member provided between adjacent cells in the plurality of cells, and
a side surface member with higher heat conductivity than heat conductivity of the heat insulating member, the side surface member being disposed in contact with side surfaces of the plurality of cells, excluding a site in which the heat insulating member is provided, and wherein the outer covering case includes the side surface member.

3. The battery pack according to claim 1 or 2, wherein the side surface member is divided and provided with respect to each of the plurality of cells.

4. The battery pack according to claim 1, wherein the side surface member is thermally connected to the outer covering case.

5. The battery pack according to claim 1, wherein the side surface member is in contact with an inner surface of the outer covering case.

6. The battery pack according to claim 1, wherein the side surface member is thermally coupled to the inner surface of the outer covering case via a high heat-conductive adhesive.

7. The battery pack according to any one of claims 1 to 6, wherein the battery block includes position fixing members sandwiching and fixing the plurality of cells, the heat insulating member, and the side surface member in a direction perpendicular to a direction in which the plurality of cells is arranged in line.

8. The battery pack according to any one of claims 1 to 6, wherein the heat insulating member and the side surface member include the position fixing parts for sandwiching and holding the plurality of cells to be fixed.

9. The battery pack according to any one of claims 1 to 8, wherein
the heat insulating member is a plate material disposed in a middle between the adjacent cells,
the side surface member includes an extending part extending around from a side surface of one of the adjacent cells opposite to a side surface where the plate material is disposed toward a side surface of one of adjacent cells, and including a groove on a tip end,
the plate material is fitted into the groove and fixed.

10. The battery pack according to any one of claims 1 to 9, comprising an air layer between the adjacent cells.
